Europäisches Patentamt

European Patent Office

Office européen des brevets

(19)

(11) Veröffentlichungsnummer: **0 242 858**

**A2**

(12) # EUROPÄISCHE PATENTANMELDUNG

(21) Anmeldenummer: 87105858.2

(22) Anmeldetag: 22.04.87

(51) Int. Cl.³: **G 05 B 19/19**

(30) Priorität: 25.04.86 DE 3614122

(43) Veröffentlichungstag der Anmeldung:
28.10.87 Patentblatt 87/44

(84) Benannte Vertragsstaaten:
AT BE CH DE ES FR GB GR IT LI LU NL SE

(71) Anmelder: Forschungsinstitut für Steuerungstechnik
der Werkzeugmaschinen und Fertigungseinrichtungen in
der
Institutsgemeinschaft Stuttgart e.V. Seidenstrasse 36
D-7000 Stuttgart(DE)

(72) Erfinder: Wurst, Karl-Heinz, Dipl.-Ing.
Nelkenstrasse 1
Korntal-Münchingen(DE)

(72) Erfinder: Pritschow, Günter, Prof. Dr.-Ing.
Grünewaldstrasse 38b
Stuttgart(DE)

(74) Vertreter: Patentanwälte Dr. Solf & Zapf
Zeppelinstrasse 53
D-8000 München 80(DE)

(54) Verfahren und Vorrichtung zur Positionskorrektur von Industrieroboterarmen.

(57) Die Erfindung betrifft ein Verfahren und eine Vorrichtung zum Korrigieren der Position des freien Endes eines Roboterarms, der als Fortsetzung mindestens eines Gelenks oder einer entsprechenden Basis ein Verbindungselement aufweist, wobei durch Verbiegungen und/oder Torsionen verursachte Auslenkungen aus der Sollposition am Ende eines Verbindungselements mit Hilfe eines aus einer im vorgeordneten Element des Roboterarms angeordneten Energiequelle ausgehenden Energiestrahls gemessen und in Abhängigkeit von der gemessenen Auslenkung der Roboterarm in die Sollposition automatisch nachgeführt wird.

EP 0 242 858 A2

Croydon Printing Company Ltd.

07.04.1986
M 651/vö

Forschungsinstitut für Steuerungstechnik der Werkzeugmaschinen und Fertigungseinrichtungen in der Institutsgemeinschaft Stuttgart e.V., Seidenstr. 36,
D-7000 Stuttgart 1

Verfahren und Vorrichtung zur Positionskorrektur von
Industrieroboterarmen

Industrieroboterarme bestehen in ihrem geometrischen Aufbau
aus Gelenk- und Antriebsvorrichtungen sowie Verbindungselementen zwischen den Gelenk- und Antriebsvorrichtungen. Am
freien Ende eines Roboterarms ist zum Beispiel ein Handgelenk angeordnet. Die Gelenkvorrichtungen können sehr steif
und winkelgenau konstruiert werden. Dagegen sind die Verbindungselemente zwischen den Gelenkvorrichtungen instabil,
d.h., daß die Endposition des Handgelenks unter Belastung
eine andere sein kann als vorbestimmt ist. Die Endposition des Handgelenks wird bei bekannten Konstruktionen aus
den Winkelmessungen der Gelenke bzw. Lagemessungen der
Achsen bei translatorischen Systemen bestimmt. Dabei wird
unterstellt, daß die Verbindungselemente beliebig steif
sind. In der Realität verfälschen jedoch Verbiegungen und
Torsionen der Verbindungselemente das berechnete Ergebnis.
Als Folge stellen sich entsprechende tatsächliche Abweichungen von der gewünschten Sollposition der Handpositionierung und -Orientierung ein. Zur Abhilfe ist vorgeschlagen worden, Absolutwertgeber z.B. in Form von Laserkreiselsystemen im Handgelenk zu verwenden. Solche Systeme sind aber sehr kostenaufwendig und daher für Industrieroboter nicht praktikabel.

Aufgabe der Erfindung ist, ein Verfahren und eine Vorrichtung anzubieten, in denen durch mangelhafte Steifigkeit der Verbindungselemente verursachte Lageabweichungen des Handgelenks eines Roboterarms mit einfachen Mitteln festgestellt und korrigiert werden können.

Diese Aufgabe wird durch die Merkmale des Verfahrensanspruchs 1 und des Vorrichtungsanspruchs gelöst. Vorteilhafte Weiterbildungen der Erfindung werden in den davon abhängigen Unteransprüchen gekennzeichnet.

Anhand der Zeichnung wird die Erfindung beispielhaft näher erläutert. Es zeigen:

Fig. 1   eine Seitenansicht eines Roboterarms,

Fig. 2   schematisch ein Roboterarmgelenk mit einer erfindungsgemäßen Meßvorrichtung,

Fig. 3   schematisch eine Kombination von drei Robotergelenken, zwischen denen Verbindungselemente angeordnet sind,

Fig. 4   schematisch die Frontansicht eines Meßfeldes mit im Querschnitt punktförmigem Meßstrahl,

Fig. 5   schematisch die Frontansicht eines Meßfeldes mit im Querschnitt linienförmigem Meßstrahl,

Fig. 6        schematisch ein Roboterarmgelenk mit einer anderen erfindungsgemäßen Meßvorrichtung,

Fig. 7        schematisch eine Vorrichtung zur Bestimmung der absoluten Lage der Strahlenführung,

Fig. 8        das Schaltbild eines Korrekturregelkreises.

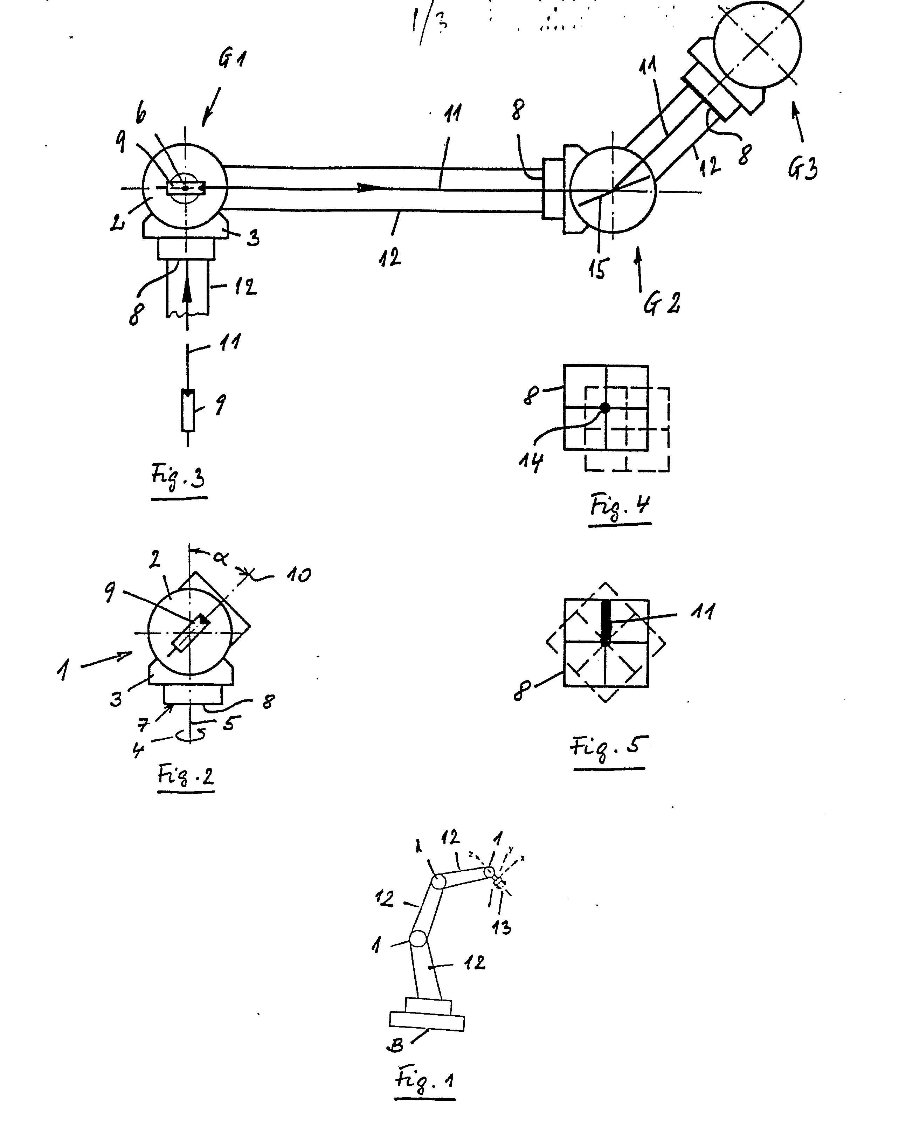

Fig. 1 zeigt schematisch einen Roboterarm mit einer Basis B, Verbindungselementen 12 und Gelenken 1 zwischen den Verbindungselementen 12. Am Ende des letzten Gelenks 1 ist eine Roboterhand 13 angeordnet.

Ein Roboterarmgelenk 1 ist eine autarke Einheit aus den beiden Antriebssystemen 2 und 3. Eine solche Einheit zählt zum Stand der Technik und wird beispielsweise in der EP-OS 85 11 40 49.1 beschrieben. Ihr Aufbau braucht deshalb im Rahmen der vorliegenden Erfindung nicht erläutert zu werden.

Das Antriebssystem 3 gestattet eine Drehung um die Eingangsachse 5 entsprechend Pfeil 4; das als Schwenkelement ausgebildete Antriebssystem 2 gestattet eine Schwenkbewegung um eine horizontale Schwenkachse 6 und zwar um den Winkel $\alpha$ .

Das Antriebssystem 3 weist eingangsseitig eine sich senkrecht zur Eingangsachse 5 erstreckende Fläche 7 auf, die mit einem Meßfeld 8 ausgestattet ist. Im Schwenkelement 2 ist ein Energiestrahler bzw. ein Laserstrahler 9 angeordnet, der in Richtung der Abgangsachse 10 des Schwenkelements 2 einen Laserstrahl 11 aussendet.

- 4 -

Nach der Erfindung werden mindestens zwei Gelenke 1 und ein Verbindungselement 12 miteinander kombiniert (Fig. 3, linke Hälfte). Von einem ersten Gelenk (nicht dargestellt) wird aus einer Laserkanone ein Strahl 11 durch ein erstes Verbindungselement : 12 gesendet. Der Strahl 11 ist stets geradlinig und trifft das Meßfeld 8 des Gelenks $G_1$.

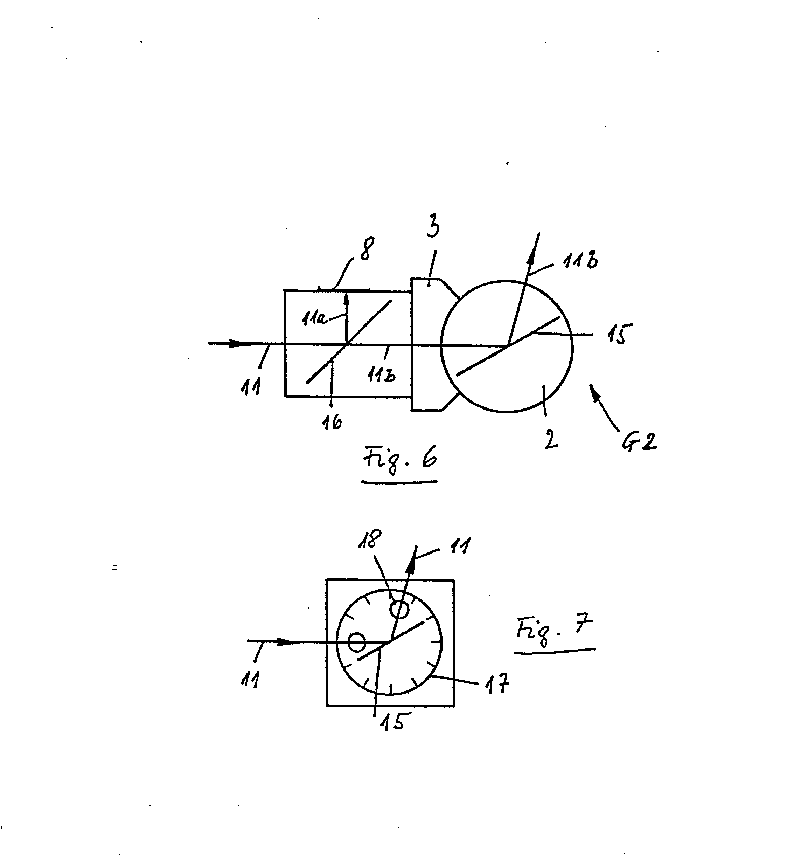

Ein Meßfeld 8 ist in der Fig. 4 dargestellt. Es ist z.B. durch die x- und z-Koordinaten in vier Meßfeldquadran (1),(2),(3),(4) eingeteilt. Der Meßstrahl 11 trifft genau ins Zentrum 14, wenn das Verbindungselement 12 beliebig steif ist. Unter Belastung werden sich jedoch Biegeversatz und Torsion einstellen. Das Meßfeld 8 versetzt sich gemäß gestrichelt gezeichneter Lage in Fig. 4 bei Versatz in x- und z-Richtung. Der Laserstrahl 11 trifft nicht mehr ins Zentrum 14, sondern z.B. in das Koordinatenfeld (1).Die Lage des Strahls 11 läßt sich je nach verwendeter Meßtechnik entweder qualitativ (z.B.über Fotodioden) oder auch quantitativ (z.B. über Fotodiodenarrays) ermitteln. Zur Ermittlung der Torsion wird der im Querschnitt punktförmige Strahl 11 im Querschnitt linienförmig aufgeweitet, was z.B. durch mechanisches Wobbeln der Laserstrahlquelle oder über eine Zylinderlinse erfolgen kann. Die Torsion bewirkt dann gemäß Fig.5 eine Lagedrehung im Meßfeld 8 und kann ebenfalls ausgewertet werden.

Eine weitere Ausführungsform der Erfindung kommt mit einer einzigen Energiestrahlquelle 9 aus. Diese Ausführungsform ist in Fig. 3 auf der rechten Seite abgebildet. Der von der Laserkanone 9 des Gelenks $G_1$ erzeugte Strahl 11 gelangt zumindest mit einem Teil seiner Intensität auf das Spiegelsystem 15 im Gelenk $G_2$ und
wird vom Spiegelsystem 15 auf das Meßfeld 8 des Gelenks
$G_3$ reflektiert. Zweckmäßigerweise wird dabei das Meßfeld
8 des Gelenks $G_2$ außerhalb des Hauptstrahlenganges
angebracht und z.B. ein halbdurchlässiger Spiegel 16
dem Spiegel 15 vorgeordnet, der sich im Antriebssystem
3 des Gelenks $G_2$ befindet. Der Spiegel 16 teilt den ankommenden Strahl 11 auf in einen reflektierten Strahl 11a
und einen durchgehenden Strahl 11b, wobei der Strahl 11a
zum Meßfeld 8 des Gelenks $G_2$ reflektiert und der Strahl
11b zum Spiegel 15 im Antriebssystem 2 des Gelenks $G_2$
durchgelassen wird. Von dort wird der Strahl 11b zum
Meßfeld 8 des Gelenks $G_3$ reflektiert. Anstelle des beschriebenen Spiegelsystems 16 kann aber auch ein Meßfeld 8 im Gelenk $G_2$ wie beim Gelenk $G_3$ im Hauptstrahlengang vorgesehen sein, das eine ausreichende Strahlendurchlässigkeit aufweist.

Eine Anordnung mit einem Spiegelsystem 15 bietet sich
insbesondere dann an, wenn der Laserstrahl durch die
Robotergelenke geführt werden muß, um für eine Bearbeitungsaufgabe positioniert zu werden (Laserstrahlbearbeitungsverfahren). Hierbei kann der Laserstrahl sowohl als
Werkzeug (Schneiden, Schweißen) als auch als Meßstrahl
verwendet werden.

Mit der beschriebenen Anordnung läßt sich ein Korrekturkreis gemäß Fig.8 aufbauen. In einer Korrekturschleife
wird der Strahler so in der Lage korrigiert, daß der
Strahl stets im Zielpunkt des Meßfeldes justiert wird.
Der Korrekturwinkel $\Delta\alpha$ wird zum Sollwert des Lagewinkels der Gelenkachse einfach addiert. Durch diese

- 6 -

Anordnung wird sichergestellt, daß die Verbiegungen des Verbindungselements exakt ausgeglichen werden. Wird anstelle des Strahlers über die Spiegelanordnung gemäß Fig. 3 korrigiert, bleibt die Anordnung gleich; es halbieren sich lediglich die Winkel bei der Spiegelkorrektur.

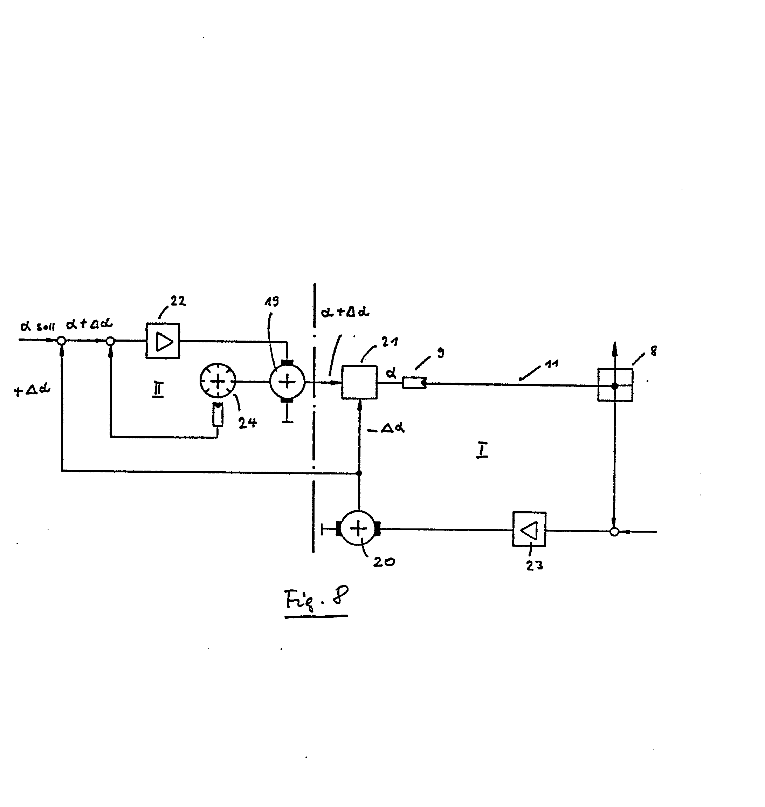

Eine Anordnung mit Spiegel, wie sie z. B. in den Fig. 3 und 6 dargestellt ist, gestattet neben der beschriebenen Positionierungskorrektur auch die Bestimmung der absoluten Lage der Strahlführung, indem der Winkel zwischen dem einfallenden und dem reflektierten Strahl gemessen wird. Eine Meßeinrichtung hierfür wird beispielsweise in Fig. 7 gezeigt. Seitlich neben dem Spiegel 15 wird eine Codierscheibe 17 mit einer Winkelgradeinteilung und einem Sensorkopf 18 angeordnet. Die Winkelcodescheibe 17 wird über einen Referenzabgleichkreis auf den einfallenden Strahl 11 justiert. Dann wird der Sensorkopf 18 zur Ablesung des Winkels zwischen dem einfallenden und dem reflektierten Strahl 11 auf der Codescheibe im Ausgangsstrahl positioniert, die Position gemessen und ausgewertet.

Zur Lagekorrektur der Endposition des Roboterarms 12 kann eine Schaltungsanordnung nach Fig. 8 angewendet werden. Die Schaltungsanordnung enthält den Energiestrahler 9, der Bestandteil des eingangsseitigen Gelenkes des Arms ist und ein Meßfeld 8, das sich am Ausgangsende des Arms 12 befindet. Die Position des Gelenkes wird über den Lageregelkreis II eingestellt, der aus einem Verstärker 22, dem Antrieb 19 und dem Istwertgeber 24 besteht. Der Lageregelkreis II hat die Aufgabe, den Arm in die Sollposition $\alpha$ soll zu bringen. Wenn die Armendposition durch Verbiegung von der Sollposition abweicht, wird der Meßstrahl 11 nicht mehr das Zentrum des Meßfeldes 8 treffen (siehe Fig. 4) und der Korrekturregelkreis I sorgt nun dafür, daß der Strahl 11 wieder in das Zentrum der Meßzelle 8 geführt wird. Der Korrekturregelkreis I besteht neben der Meßzelle 8 und dem Verstärker 23 aus dem Stellgliedmotor 20 und dem Energiestrahler 9, der sich beweglich über ein Getriebe, hier ein Überlagerungsgetriebe 21, in dem eingangsseitigen Gelenk 2 des Arms befindet. Der Korrekturwinkel sei $-\alpha$. Dieser Korrekturwinkel wird mit entgegengesetzten Vorzeichen zum Lagesollwert $\alpha$ soll addiert, so daß der Lageregelkreis II den Gesamtsollwert $\alpha$ soll $+ \Delta\alpha$ einstellt. Über das Überlagerungsgetriebe 21 ergibt sich nun für den Energiestrahl 11 durch Addition vom Gesamtsollwert $\alpha$ soll $+ \Delta\alpha$ und dem Korrekturwert $-\Delta\alpha$ der gewollte resultierende Winkel $\alpha$. Da der Energiestrahl 11 ins Zentrum der Meßzelle 8 8 durch den Korrekturregelkreis I geführt wird, entspricht die Lage der Armendposition exakt der gewollten Endposition unabhängig von der Durchbiegung.

0242858

07.04.1986
M 651/vö

A n s p r ü c h e

1. Verfahren zum Korrigieren der Position des freien Endes eines Roboterarms, der als Fortsetzung mindestens eines Gelenks oder einer entsprechenden Basis ein Verbindungselement aufweist, d a d u r c h g e k e n n z e i c h n e t , daß durch Verbiegungen und/oder Torsionen verursachte Auslenkungen aus der Sollposition am Ende eines Verbindungselements mit Hilfe eines aus einer im vorgeordneten Element des Roboterarms angeordneten Energiequelle ausgehenden Energiestrahls gemessen und in Abhängigkeit von der gemessenen Auslenkung der Roboterarm in die Sollposition automatisch nachgeführt wird.

2. Verfahren nach Anspruch 1, d a d u r c h g e k e n n - z e i c h n e t , daß ein Lichtstrahl verwendet wird.

3. Verfahren nach Anspruch 1, d a d u r c h g e k e n n - z e i c h n e t , daß ein Laserstrahl verwendet wird.

4. Verfahren nach einem oder mehreren Ansprüche 1 bis 3, d a d u r c h g e k e n n z e i c h n e t , daß eine in einem Gelenk angeordnete Energiequelle und ein Meßfeld verwendet werden, wobei die Energiequelle einen Energiestrahl durch das Verbindungselement auf ein am anderen Ende des Verbindungselements angeordnetes Meßfeld, vorzugsweise auf ein in oder am nachfolgenden Gelenk angeordnetes Meßfeld sendet.

5. Verfahren nach einem oder mehreren Ansprüche 1 bis 4, d a d u r c h   g e k e n n z e i c h n e t , daß ein im Querschnitt punktförmiger Energiestrahl verwendet wird.

6. Verfahren nach einem oder mehreren Ansprüche 1 bis 4, d a d u r c h   g e k e n n z e i c h n e t , daß ein im Querschnitt linienförmiger Energiestrahl verwendet wird.

7. Verfahren nach Anspruch 6, d a d u r c h   g e k e n n z e i c h n e t ,  daß der Energiestrahl durch Wobbeln erzeugt wird.

8. Verfahren nach Anspruch 6, d a d u r c h   g e k e n n z e i c h n e t ,  daß der Energiestrahl mit einer Zylinderlinse erzeugt wird.

9. Verfahren nach einem oder mehreren Ansprüche 1 bis 8, d a d u r c h   g e k e n n z e i c h n e t , daß ein Meßfeld verwendet wird, das Photodioden aufweist.

10. Verfahren nach einem oder mehreren Ansprüche 1 bis 8, d a d u r c h   g e k e n n z e i c h n e t , daß ein Meßfeld verwendet wird, das Photodioden- arrays aufweist.

0242858

11. Verfahren nach einem oder mehreren Ansprüche 1 bis 10, d a d u r c h   g e k e n n z e i c h - n e t , daß mindestens ein , zumindest Teilmengen des Energiestrahls durchlässiges Meßfeld in Kombination mit mindestens einem im Strahlengang nachgeordneten Spiegel verwendet wird und der Spiegel den Energiestrahl durch ein weiteres Verbindungselement auf ein weiteres Meßfeld reflektiert.

12. Verfahren nach einem oder mehreren Ansprüche 1 bis 11, d a d u r c h   g e k e n n z e i c h - n e t , daß ein im Strahlengang am Ende eines Verbindungselements angeordneter, Teilmengen des Energiestrahls durchlässiger Spiegel in Kombination mit einem im Strahlengang nachgeordneten Spiegel und ein außerhalb des Strahlenganges angeordnetes Meßfeld verwendet werden.

13. Verfahren nach Anspruch 11 und/oder 12, d a d u r c h   g e k e n n z e i c h   n e t , daß die Lage des Reflektionswinkels des an einem Spiegel reflektierten Strahls gemessen wird.

14. Verfahren nach Anspruch 13, d a d u r c h   g e k e n n z e i c h n e t , daß der Reflektionswinkel mit einer Codierscheibe und einem nachgeführten Sensor gemessen wird.

15. Verfahren nach einem oder mehreren der Ansprüche 1 bis 14, d a d u r c h   g e k e n n z e i c h n e t , daß zur Kompensation der Roboterarmausbiegung eine Regelungseinrichtung verwendet wird mit einem Regelkreis I, bestehend aus dem Stellgliedmotor (20),Getriebe (21) und Energiestrahler (9) sowie aus dem Meßgliedempfänger (8) sowie aus dem Regelkreis eine Rückführung des Energiestrahls (11) in das Zentrum des Meßgliedes (8) durchführt und der Verstellwinkel $\Delta\alpha$ als Kompensationswinkel dem Lageregelkreis II der Roboterantriebsachse (2) überlagert wird.

16. Roboterarm, bestehend aus mindestens einem Gelenk oder einer entsprechenden Basis und mindestens einem Verbindungselement, das dem Gelenk bzw. der Basis nachgeordnet ist, bei dem das Verfahren nach einem oder mehreren der Ansprüche 1 bis 15 angewendet wird, g e k e n n z e i c h n e t   d u r c h mindestens eine am Roboterarm fest angeordnete Energiequelle am Anfang eines Verbindungselements, vorzugsweise im oder am vorgeordneten Gelenk oder in oder an der vorgeordneten Basis und mindestens ein Meßfeld am Ende eines Verbindungselements, vorzugsweise in oder an dem Ende nachgeordneten Gelenk oder dergleichen.

17. Roboterarm nach Anspruch 16, d a d u r c h   g e k e n n z e i c h n e t , daß die Energiequelle eine Lichtstrahlquelle ist.

- 5 -

18. Roboterarm nach Anspruch 16, d a d u r c h
g e k e n n z e i c h n e t , daß die Energiequelle ein Laserstrahler ist.

19. Roboterarm nach einem oder mehreren der Ansprüche
16 bis 18, d a d u r c h  g e k e n n -
z e i c h n e t , daß die Energiequelle (9) im
Antriebselement (2) eines Gelenks (1) angeordnet
ist.

20. Roboterarm nach einem oder mehreren der Ansprüche
16 bis 19, d a d u r c h  g e k e n n -
z e i c h n e t , daß die Meßfeldebene des Meßfeldes (8) senkrecht zum Strahlengang des Strahls
(11) angeordnet ist.

21. Roboterarm nach einem oder mehreren der Ansprüche
16 bis 20, d a d u r c h  g e k e n n -
z e i c h n e t , daß das Meßfeld (8) am Antriebselement (3) eines Gelenks (1) angeordnet ist.

22. Roboterarm nach einem oder mehreren der Ansprüche
16 bis 21, d a d u r c h  g e k e n n -
z e i c h n e t , daß das Meßfeld (8) in Quadranten aufgeteilt ist und ein Zentrum (14) aufweist.

23. Roboterarm nach einem oder mehreren der Ansprüche
16 bis 22, g e k e n n z e i c h n e t
d u r c h  eine Energiequelle (8), die einen
punktförmigen Strahl (11) aussendet.

24. Roboterarm nach einem oder mehreren der Ansprüche 16 bis 22, g e k e n n z e i c h n e t d u r c h eine Energiequelle (9), die einen im Querschnitt linienförmigen Energiestrahl (11) aussendet.

25. Roboterarm nach Anspruch 24, g e k e n n - z e i c h n e t d u r c h eine Wobbeleinrichtung an der Energiequelle (9).

26. Roboterarm nach Anspruch 24, g e k e n n - z e i c h n e t d u r c h eine der Energiequelle (9) zugeordnete Zylinderlinse.

27. Roboterarm nach einem oder mehreren der Ansprüche 16 bis 26, g e k e n n z e i c h n e t d u r c h ein energiestrahldurchlässiges Meßfeld (8), wobei dem Meßfeld (8) ein Spiegel (15) nachgeordnet ist, der vorzugsweise im Antriebselement (2) des Gelenks angeordnet ist.

28. Roboterarm nach einem oder mehreren der Ansprüche 16 bis 26, g e k e n n z e i c h n e t d u r c h einen energiestrahldurchlässigen Spiegel (16) im Strahlengang am Ende eines Verbindungselements (12), dem ein Spiegel (15) nachgeordnet ist, der vorzugsweise im Antriebselement (2) eines Gelenks (1) angeordnet ist, wobei das Meßfeld (8) außerhalb des Strahlengangs angeordnet ist, derart, daß es einen reflektierten Strahl des Spiegels (16) aufnehmen kann.

29. Roboterarm nach einem oder mehreren der Ansprüche 16 bis 26, g e k e n n z e i c h n e t , d u r c h ein Meßfeld (8), das Photodioden aufweist.

30. Roboterarm nach einem oder mehreren der Ansprüche 16 bis 28, g e k e n n z e i c h n e t d u r c h ein Meßfeld (8), das Photodiodenarrays aufweist.

31. Roboterarm nach einem oder mehreren der Ansprüche 27 bis 30, g e k e n n z e i c h n e t d u r c h eine einem Spiegel (16 und/oder 15) zugeordnete Winkelmeßeinrichtung.

32. Roboterarm nach Anspruch 31, d a d u r c h g e k e n n z e i c h n e t , daß die Winkel- meßeinrichtung aus einer Codierscheibe (17) und einem nachführbaren Sensorkopf (18) besteht.

33. Robotergelenk (1) mit einem oder mehreren Frei- heitsgeraden, d a d u r c h g e k e n n - z e i c h n e t , daß eingangsseitig ein Meßfeld (8) und ausgangsseitig ein Energiestrahler (9) angeordnet ist, entsprechend einem oder mehreren der Ansprüche 16 bis 31.

34. Robotergelenk (1) mit einem ausgangsseitig angeordneten Energiestrahler (9) nach Anspruch 33, d a d u r c h g e k e n n z e i c h n e t , daß die Lage des Energiestrahlers (9) gegenüber dem abgehenden Antriebsschwenkelement (2) beweglich angeordnet ist und vorzugsweise über ein Überlagerungsgetriebe (21) verstellbar ist.

0242858

1/3

Fig. 3

Fig. 4

Fig. 2

Fig. 5

Fig. 1

Fig. 6

Fig. 7

Fig. 8